**Europäisches Patentamt**

**European Patent Office**

**Office européen des brevets**

(11) Veröffentlichungsnummer: **0 492 749 A2**

# (12) EUROPÄISCHE PATENTANMELDUNG

(21) Anmeldenummer: **91250315.8**

(22) Anmeldetag: **18.11.91**

(51) Int. Cl.5: **H04N 1/028**

(30) Priorität: **20.12.90 DE 4041366**

(43) Veröffentlichungstag der Anmeldung:
**01.07.92 Patentblatt 92/27**

(84) Benannte Vertragsstaaten:
**AT BE CH DE FR GB IT LI NL SE**

(71) Anmelder: **MANNESMANN Aktiengesellschaft**
**Mannesmannufer 2**
**W-4000 Düsseldorf 1(DE)**

(72) Erfinder: **Mägde, Werner**
**Weichselstrasse 34**
**W-7730 VS-Villingen(DE)**
Erfinder: **Stellmach, Dieter**

**Königsberger Strasse 36**
**W-7737 Bad Dürrheim(DE)**
Erfinder: **Reismann, Norbert**
**An der Kapelle 1**
**W-7730 Villingen(DE)**
Erfinder: **Kilb, Hermann**
**Gaisbergring 23**
**W-7734 Brigachtal(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Zeilen-Scanner.**

(57) Ein Zeilen-Scanner wird zum Erfassen, Speichern und Weiterverarbeiten von Bildern oder Schriften von einem Aufzeichnungsträger eingesetzt. Ein Gehäuse (1) weist eine Strahleintrittsöffnung (8) auf, die dem Aufzeichnungsträger (5) gegenüberliegt. Ferner ist eine Zeile von LED-Elementen, ein Spiegelsystem und ein im Strahlengang (4) vor einem Sensor (2) liegendes Kamera-Objektiv (3) vorhanden.

Um die Gegenstandsweite zu beeinflussen und damit eine große Baubreite und eine große Bauhöhe des Zeilen-Scanners zu verhindern, wird vorgeschlagen, daß der Strahlengang (4) vom Eintritt an den Eintrittsöffnungen (8) schalenförmig um ein mittig angeordnetes Kamera-Objektiv (3) verläuft, wobei der Sensor (2) ebenfalls im Schalen-Inneren (9) gegenüber dem Kamera-Objektiv (3) angeordnet ist.

Fig.3

Die Erfindung betrifft einen Zeilen-Scanner zum Erfassen, Speichern und Weiterverarbeiten von Bildern oder Schriftzeichen von einem Aufzeichnungsträger mit einem Gehäuse und zumindest einer Strahleneintrittsöffnung, die dem Aufzeichnungsträger gegenüberliegt, einer Zeile von LED-Elementen, einem Spiegelsystem und einem im Strahlengang vor einem Sensor angeordneten Kamera-Objektiv.

Derartige Zeilen-Scanner werden außer nach der Intensität der Auflösung, d.h. der Anzahl von Pixels, nach Kriterien, wie z.B. Strichzeichnungen, Logos, Symbole, Texterkennung, technische Zeichnungen, Verarbeitung von Fotos und Bildern. Software-Ausstattung, unterschieden, um den richtigen Zeilen-Scanner auszuwählen.

Nachfolgend werden zwei auf dem Markt befindliche bekannte Systeme mit unterschiedlichen Strahlengängen beschrieben:

Ein erstes System (ein sog. Kontact-Sensor-Type) erfordert, daß der Sensor die ganze abzutastende Belegbreite überdeckt. Daraus folgt eine große Baubreite. Da der optische Weg kleiner als ca. 10 mm ist, muß der Sensor unmittelbar über dem Beleg angeordnet werden. Hieraus ergibt sich eine kleine Bauhöhe, aber ein geringer Tiefenschärfen-Bereich von gleich oder kleiner 0,3 mm.

Ein zweites System (ein sog. Remote-Sensor-Type) arbeitet unabhängig von der Belegbreite, da diese durch ein Kamera-Objektiv auf den Sensor projiziert wird. Dieses System weist daher eine relativ kleine Baubreite auf. Hier ist der optische Weg abhängig von der Abtastbreite und der Brennweite des Kamera-Objektivs. Angenommen, die Brennweite des Kamera-Objektivs sei f = 35 mm und die Abtastbreite sei 216 mm, dann beträgt die Gegenstandsweite g = 350 mm. Daraus folgt eine große Bauhöhe des Zeilen-Scanners bei großem Tiefenschärfe-Bereich von ca. 3 mm.

Der Nachteil des ersten Systems ist eine große Baubreite, und der Nachteil des zweiten Systems eine große Bauhöhe des Zeilen-Scanners.

Der vorliegenden Erfindung liegt daher die Aufgabe zugrunde, die genannten Nachteile der großen Baubreite bzw. der großen Bauhöhe zu vermeiden und trotzdem einen großen Tiefenschärfen-Bereich bei einem kleinen Bauvolumen zu erzielen.

Die gestellte Aufgabe wird ausgehend von dem eingangs bezeichneten Zeilen-Scanner erfindungsgemäß dadurch gelöst, daß der Strahlengang vom Eintritt an den Eintrittsöffnungen schalenförmig um ein mittig angeordnetes Kamera-Objektiv verläuft, wobei der Sensor ebenfalls im Schalen-Inneren gegenüber dem Kamera-Objektiv angeordnet ist. Dieser schalenförmige Verlauf des Strahlengangs führt gewissermaßen zu einer "Faltung" der Gegenstandsweite, d.h. der bei bekannten Scannern relativ lange optische Weg wird in Teilstrecken zerlegt, die teilweise parallel verlaufen, so daß nur noch ein Bruchteil der gesamten Gegenstandsweite notwendig ist, wodurch entweder die Baubreite oder die Bauhöhe oder beide erheblich verkleinert werden. Diese Strahlenführung ermöglicht also eine kompakte, modulare Bauweise des Zeilen-Scanners. Der Konstrukteur ist aufgrund dieses Vorschlags in der Lage, die Spiegelabstände konstruktiv frei zu wählen und außerdem auch die Objektiv-Brennweite entsprechend zu wählen, so daß er auch den Anbringungsort für den Sensor in weiten Grenzen bestimmen kann.

Aufgrund dieses Grundprinzips wird vorgeschlagen, daß der Strahlengang durch winklig in den Ecken eines rechteckigen Gehäuses angeordneten Spiegeln und zentrisch auf der Mittenachse des Gehäuses verläuft. Damit wird eine etwa dreifache Faltung der Gegenstandsweite erzielt.

Ein weiterer Vorschlag besteht darin, daß die Eintrittsöffnung im Eckenbereich eines rechteckigen Gehäuses und ein Spiegel aus der Ecke zur Mitte hin versetzt angeordnet sind oder umgekehrt. Auch hier wird die etwa dreifache Faltung des Strahlenganges erreicht.

Ein anderer Vorschlag zur Ausgestaltung des grundlegenden Prinzips besteht darin, daß ein sich in übereinanderliegenden Ebenen überschneidender Strahlengang mit unterschiedlich großen Spiegelprismen in den Eckenbereichen vorgesehen ist.

Eine weitere Alternative besteht darin, daß die Eintrittsöffnung an der Schmalseite eines rechteckigen Gehäuses vorgesehen ist, dessen Eckenbereich von einem Spiegelprisma freigehalten ist.

Schließlich besteht eine zusätzliche Ausführungsform darin, daß ein Gehäuse vorgesehen ist, dessen Wandung in den Eckenbereichen die jeweiligen Spiegelflächen im Inneren bilden.

In der Zeichnung sind Ausführungsbeispiele der Erfindung dargestellt, die nachfolgend näher erläutert werden. Es zeigen:

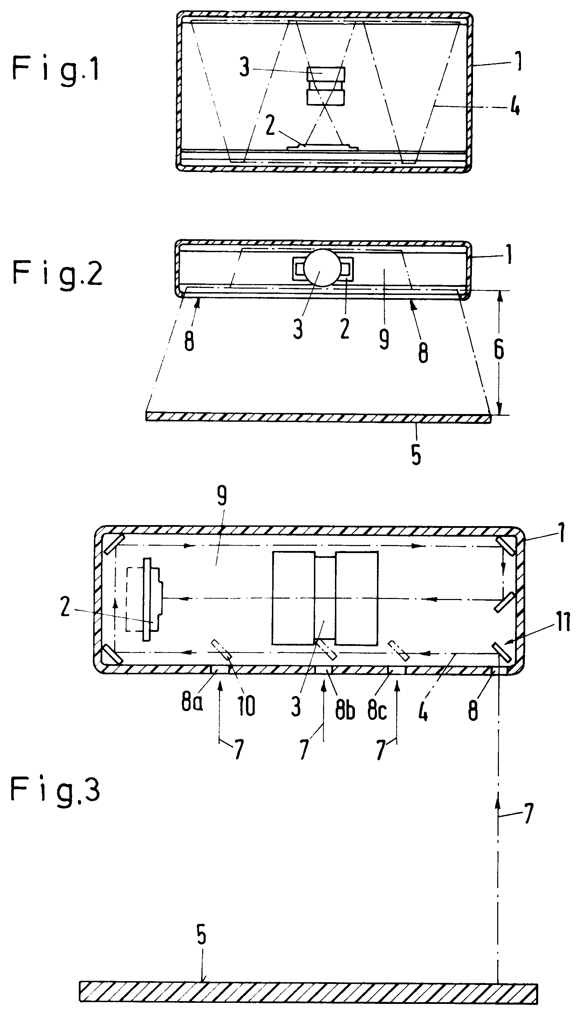

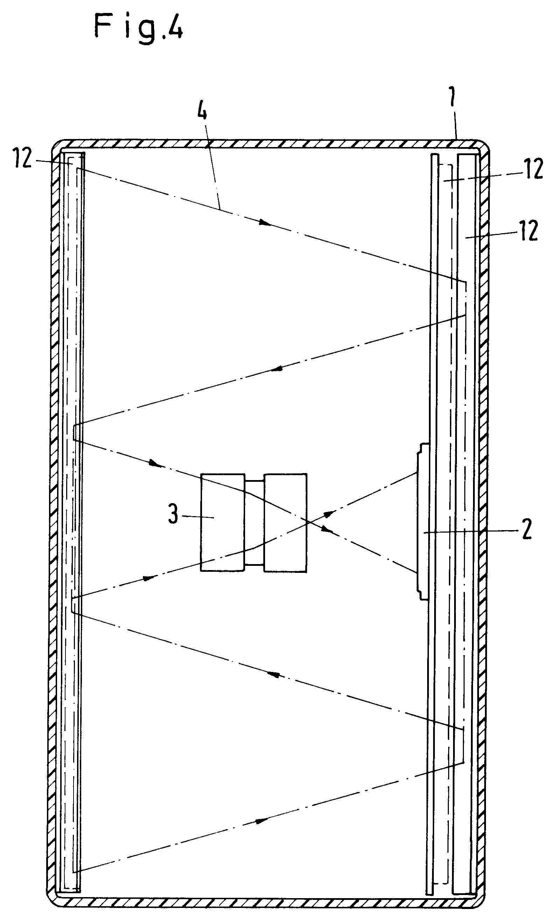

Fig. 1
die Draufsicht auf einen Zeilen-Scanner mit eingezeichnetem Strahlengang,
Fig. 2
die zu Fig. 1 gehörende Seitenansicht des Zeilen-Scanners,
Fig. 3
einen Querschnitt durch ein weiteres Ausführungsbeispiel,
Fig. 4
eine Vergrößerung der Fig. 1 mit weiteren Einzelheiten,
Fig.5, 6, 7 und 8
vier weitere Alternativen im Schnitt wie Fig. 3 dargestellt,
Fig. 9
ein zusätzliches Ausführungsbeispiel und
Fig.10

ein Blockschaltbild des Zeilen-Scanners.

Der Zeilen-Scanner dient zum Erfassen, Speichern und Weiterverarbeiten von Bildern oder Schriftzeichen von einer Vorlage bzw. Aufzeichnungsträger, die unter dem Gerät kontinuierlich bewegt werden. Selbstverständlich könnte auch das Gerät über den ortsfesten Aufzeichnungsträger gefahren werden. Die hierbei gewonnenen Signale können über EDV-Geräte, wie z.B. Computer, weiterverarbeitet oder in bekannten Speichern abgelegt werden.

Ein Gehäuse 1 umgibt ein Spiegelsystem, eine Zeile von LED-Elementen und einen Sensor Z (z.B. einen CCD-Sensor/Change-Couple-Device) sowie ein im Strahlengang vor dem Sensor angeordnetes Kamera-Objektiv 3, das aus einem Linsen-System zum Sammeln der Lichtstrahlen besteht.

Gemäß einem ersten Ausführungsbeispiel (Fig. 1) wird ein Strahlengang 4 durch Abtasten eines Aufzeichnungsträgers 5 mehrfach gespiegelt und über das sammelnde Kamera-Objektiv 3 in den Sensor 2 geleitet. Der Abstand 6 zwischen dem Zeilen-Scanner und dem Aufzeichnungsträger 5 beträgt hier ca. 80 mm (Fig. 2).

Gemäß diesem Ausführungsbeispiel wird ein Eingangsstrahl 7 durch eine Eintrittsöffnung 8 schalenförmig (gefaltet) um das mittig angeordnete Kamera-Objektiv 3 herumgeführt (Fig. 3). Der Sensor 2 ist ebenfalls im Schalen-Inneren 9 gegenüber dem Kamera-Objektiv 3 angeordnet. Hier ist deutlich die "Faltung" des Strahlenganges 4 zu erkennen.

Alternativ sind weitere Eintrittsöffnungen 8a, 8b, 8c mit jeweils zugehörigen Eintrittsspiegeln 10 vorgesehen, die je nach dem abzutastenden Objekt einsetzbar sind.

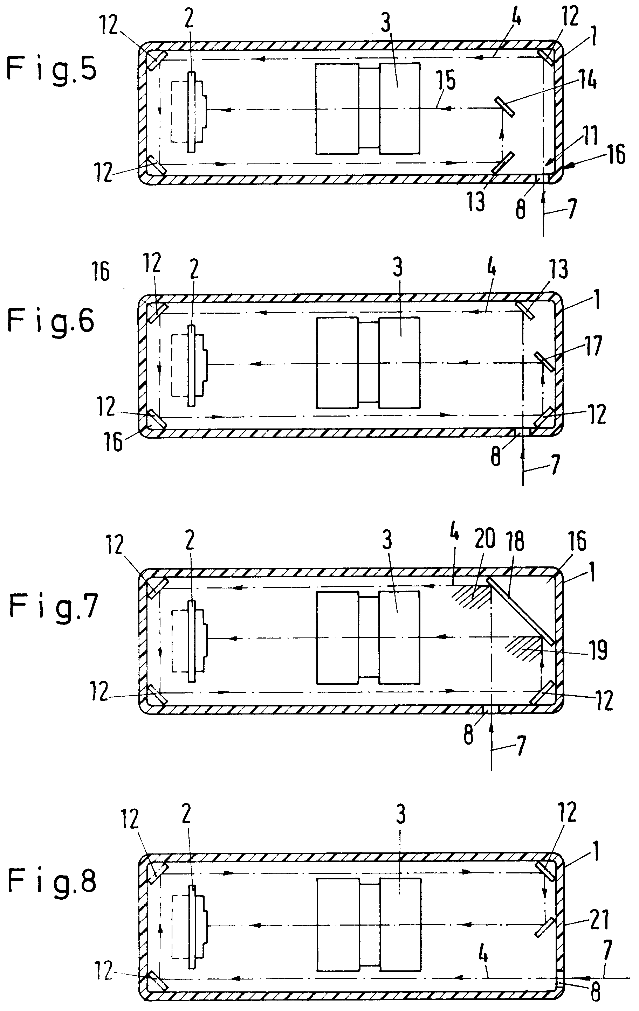

Ein anderes Ausführungsbeispiel (Fig. 5 bis 8) sieht winklig in den Eckbereichen 11 angeordnete Spiegel 12 vor. Ein längenversetzter Spiegel 13 ist vor der Eintrittsöffnung 8 angeordnet und ein längenversetzter mittiger Spiegel 14 liegt auf der Mittenachse 15 (Fig. 5). Hier liegt die Eintrittsöffnung 8 im Eckenbereich 11 des rechteckigen Gehäuses 1, und der Spiegel 14 ist aus der Ecke 16 heraus zur Mitte des Gerätes hin versetzt angeordnet, was auch umgekehrt sein könnte.

Gemäß Fig. 6 sind neben den Spiegeln 12 in den Ecken 16 eine vorgezogene Eintrittsöffnung 8 und ein Mittenspiegel 17 sowie der längenversetzte Spiegel 13 vorgesehen.

In Fig. 7 ist neben der vorgezogenen Eintrittsöffnung 8 ein die Spiegel 13 und 17 ersetzender Spiegel 18 angeordnet. Hier können Strahlengänge 4 in übereinanderliegenden Ebenen 19 und 20 mit den unterschiedlich großen Spiegeln 12 und 18 in den Eckenbereichen 11 bzw. den Ecken 16 eingesetzt werden.

Die Eintrittsöffnung 8 kann auch an der Schmalseite 21 des rechteckigen Gehäuses 1 vorgesehen sein, dessen Eckenbereich 11 von einem Spiegelprisma freigehalten ist (Fig. 8).

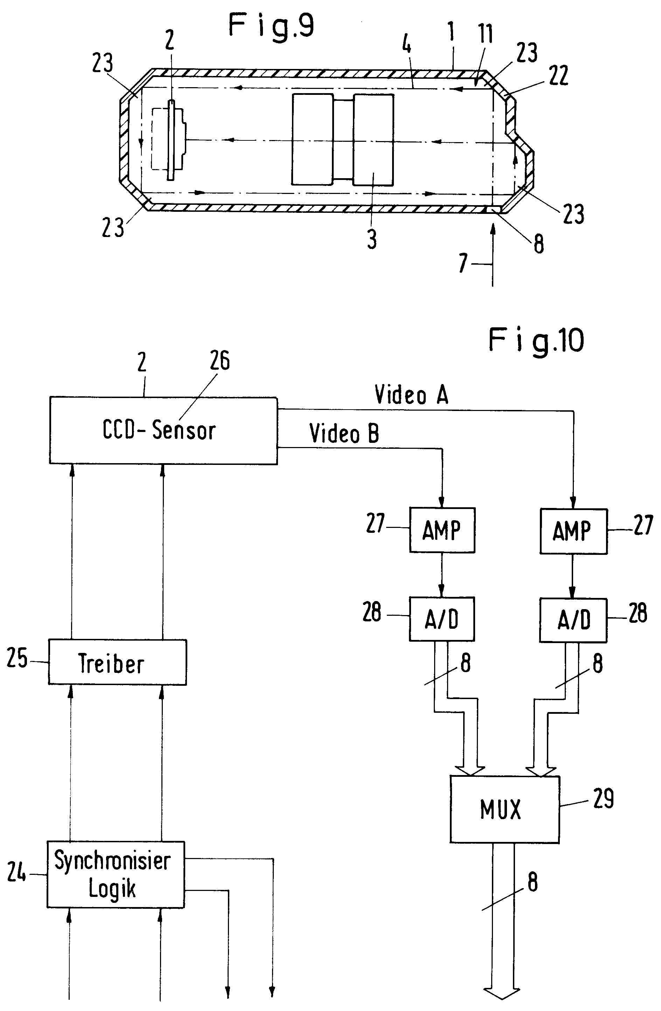

Nach einem weiteren Ausführungsbeispiel (Fig. 9) ist ein umgestaltetes Gehäuse vorgesehen, dessen Wandung 22 in den Eckenbereichen 11 die jeweilige Spiegelfläche 23 im Inneren trägt, so daß ein besonderer Spiegel entbehrlich ist. Die Spiegelflächen 23 sind hier unmittelbar auf die Innenfläche aufgedampft.

Das Blockschaltbild in Fig. 10 zeigt die wesentlichen Elektronik-Baugruppen des Zeilen-Scanners. Ausgehend von einer Synchronisier-Logik 24 und einem Treiber 25 bildet ein CCD-Sensor 26 eine Anzahl von Pixels, die der Breite des Aufzeichnungsträgers 5 entspricht. Von dieser Matrix werden bei Belichtung Spannungssignale erzeugt, die über getrennte Leitungen Video A bzw. Video B jeweils auf Verstärker 27 und Analog-Digital-Wandler 28 geschickt werden und in einem Multiplexer 29 zusammengeführt werden. Die Daten werden sodann in einem Strom von 8 bit-Wörtern in das erwähnte EDV-Gerät weitergeleitet oder in einem Massenspeicher abgelegt.

## Patentansprüche

1. Zeilen-Scanner zum Erfassen, Speichern und Weiterverarbeiten von Bildern oder Schriftzeichen von einem Aufzeichnungsträger, mit einem Gehäuse und zumindest einer Strahleneintrittsöffnung, die dem Aufzeichnungsträger gegenüberliegt, einer Zeile von LED-Elementen, einem Spiegelsystem und einem im Strahlengang vor einem Sensor angeordneten Kamera-Objektiv,
dadurch gekennzeichnet,
daß der Strahlengang (4) vom Eintritt an den Eintrittsöffnungen (8) schalenförmig um ein mittig angeordnetes Kamera-Objektiv (3) verläuft, wobei der Sensor (2) ebenfalls im Schalen-Inneren (9) gegenüber dem Kamera-Objektiv (3) angeordnet ist.

2. Zeilen-Scanner nach Anspruch 1,
dadurch gekennzeichnet,
daß der Strahlengang (4) durch winklig in den Ecken (11) eines rechteckigen Gehäuses (1) angeordneten Spiegeln (12) und zentrisch auf der Mittenachse (15) des Gehäuses (1) verläuft.

3. Zeilen-Scanner nach Anspruch 1,
dadurch gekennzeichnet,
daß die Eintrittsöffnung (8) im Eckenbereich (11) eines rechteckigen Gehäuses (1) und ein Spiegel (14) aus der Ecke (16) zur Mitte hin versetzt angeordnet sind oder umgekehrt.

4. Zeilen-Scanner nach Anspruch 1,
dadurch gekennzeichnet,
daß ein sich in übereinander liegenden Ebenen (19,20) überschneidender Strahlengang (4) mit unterschiedlich großen Spiegelprismen (12;18) in den Eckenbereichen (11) vorgesehen ist.

5. Zeilen-Scanner nach Anspruch 1,
dadurch gekennzeichnet,
daß die Eintrittsöffnung (8) an der Schmalseite (21) eines rechteckigen Gehäuses (1) vorgesehen ist, dessen Eckenbereich (11) von einem Spiegelprisma freigehalten ist.

6. Zeilen-Scanner nach Anspruch 1,
dadurch gekennzeichnet,
daß ein Gehäuse (1) vorgesehen ist, dessen Wandung (22) in den Eckenbereichen (11) die jeweiligen Spiegelflächen (23) im Inneren bilden.

Fig.1

Fig.2

Fig.3

# Fig.4

Fig.5

Fig.6

Fig.7

Fig.8

# Fig.9

# Fig.10